(19)

Europäisches
Patentamt

European
Patent Office

Office européen
des brevets

(11)  **EP 4 266 004 A1**

(12)  **EUROPEAN PATENT APPLICATION**
published in accordance with Art. 153(4) EPC

(43) Date of publication:
**25.10.2023  Bulletin 2023/43**

(21) Application number: **21905502.7**

(22) Date of filing: **29.11.2021**

(51) International Patent Classification (IPC):
**G01C 21/20** (2006.01)   **G01S 19/48** (2010.01)

(52) Cooperative Patent Classification (CPC):
**G01C 21/20; G01S 19/48**

(86) International application number:
**PCT/CN2021/134025**

(87) International publication number:
**WO 2022/127573 (23.06.2022 Gazette 2022/25)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **17.12.2020  CN 202011493438**

(71) Applicant: **ZTE Corporation
Shenzhen, Guangdong 518057 (CN)**

(72) Inventor: **JIN, Ningdi
Shenzhen, Guangdong 518057 (CN)**

(74) Representative: **Petraz, Gilberto Luigi et al
GLP S.r.l.
Viale Europa Unita, 171
33100 Udine (IT)**

(54)  **USER TRAJECTORY POSITIONING METHOD, ELECTRONIC DEVICE AND COMPUTER STORAGE MEDIUM**

(57)    A user trajectory positioning method, an electronic device, and a computer storage medium. The method comprises: based on a single-point indoor/outdoor determination result, performing user-level smoothing on the indoor/outdoor determination result (S101); if the user-level determination result is outdoor, performing user-level trajectory smoothing based on an outdoor single-point positioning result, and matching the user-level trajectory smoothing with a road (102); if the user-level determination result is indoor, performing indoor point smoothing based on an indoor single-point positioning result (S 103); and generating a single-user complete trajectory based on a matching result between the user-level trajectory smoothing and the road as well as the indoor point smoothing (S104).

Fig. 1

EP 4 266 004 A1

**Description**

**Cross-reference to Related Applications**

The application claims the priority of Chinese patent application No. 202011493438.X, filed on December 17, 2020 and entitled "User trajectory positioning method, electronic device and computer storage medium", which is incorporated herein by reference in its entirety.

**Technical Field**

The present disclosure relates to wireless communication, positioning and navigation technologies, and in particular to a user trajectory positioning method, an electronic device and a computer storage medium.

**Background**

Most of current operators implement positioning mostly on the basis of simple single-point positioning, performing positioning on each measure report (MR), which is reported by a terminal, by using various positioning methods. The positioning methods include various triangular positioning methods and fingerprint positioning methods, and a very small amount of MRs carry their own AGPS. The operators implement positioning mostly based on measurement values that can represent the distance between a user equipment and a cell, for example, a reference signal received power (RSPR) and a timing advance. However, those measurement values will be greatly affected by time-variant multipath and time-variant fading, which results in poorer precision of a positioning data source, and thus, the precision of single-point positioning is difficult to improve, and the precision of positioning is low.

**Summary**

The present disclosure provides a user trajectory positioning method, an electronic device and a computer storage medium, by which higher precision of positioning can be obtained.

In accordance with an aspect, an embodiment of the disclosure provides a user trajectory positioning method, which includes: performing user-level indoor/outdoor determination result smoothing based on a single-point indoor/outdoor determination result; if the user-level determination result is outdoor, performing user-level trajectory smoothing based on an outdoor single-point positioning result, and matching the user-level trajectory smoothing with a road ; if the user-level determination result is indoor, performing indoor point smoothing based on an indoor single-point positioning result; and generating a single-user complete trajectory based on a matching result of the user-level trajectory smoothing and the road as well as the indoor point smoothing.

In accordance with another aspect, an embodiment of the disclosure further provides an electronic device, including a processor and a memory. The memory is configured to store a computer-executable instruction, which, when being executed, enables the processor to execute the steps of the user trajectory positioning method.

In accordance with a further aspect, an embodiment of the disclosure further provides a computer-readable storage medium. The computer-readable storage medium stores one or more programs, which, when being executed by an electronic device that includes a plurality of application programs, enables the electronic device to execute the steps of the user trajectory positioning method.

**Brief Description of the Drawings**

Fig. 1 is a flowchart of a user trajectory positioning method provided by an embodiment of the disclosure;
Fig. 2 is a flowchart of a road network topological structure extraction process provided by an embodiment of the disclosure;
Fig. 3 is a flowchart of a user-level indoor/outdoor determination process provided by an embodiment of the disclosure;
Fig. 4 is a flowchart of a user-level outdoor trajectory smoothing process and a road matching process provided by an embodiment of the disclosure;
Fig. 5 is a schematic diagram of a "point-to-line" road matching projection point being on a road provided by an embodiment of the disclosure;
Fig. 6 is a schematic diagram of a "point-to-line" road matching projection point being out of a road provided by an embodiment of the disclosure;
Fig. 7 is a schematic diagram of a tree structure for topology-based road matching provided by an embodiment of the disclosure; and

Fig. 8 is a schematic structural diagram of an electronic device provided by an embodiment of the disclosure.

**Detailed Description**

Preferred embodiments of the disclosure will be illustrated below in conjunction with the accompanying drawings. It should be understood that the preferred embodiments described herein are merely intended to illustrate and explain the disclosure, and are not intended to limit the disclosure.

In an embodiment of the disclosure, a user trajectory positioning method involves: performing user-level indoor/outdoor determination based on a single-point indoor/outdoor determination result; performing user-level trajectory smoothing and road matching based on an outdoor single-point positioning result; performing indoor point smoothing based on an indoor single-point positioning result; and generating a single-user complete trajectory based on the user-level trajectory smoothing, the road matching and the indoor point smoothing. Compared with a single point that is input, the finally generated single-user complete trajectory has higher precision of positioning, and has a positioning result, a timing relationship in which is more rational.

Embodiment I

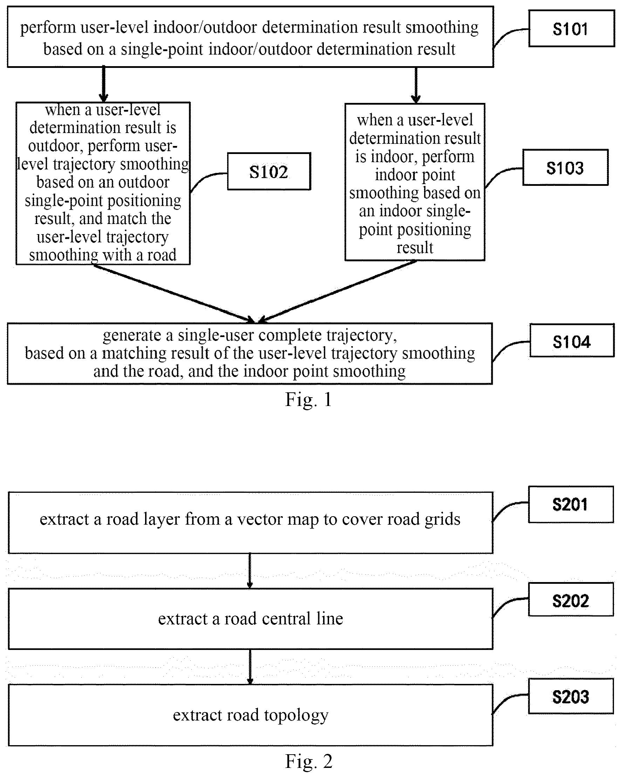

Fig. 1 is a flowchart of a user trajectory positioning method provided in the embodiment of the disclosure. The user trajectory positioning method of the embodiment of the disclosure will be described in details below with reference to Fig. 1.

The method begins at step S101, where user-level indoor/outdoor determination result smoothing is performed based on a single-point indoor/outdoor determination result.

In the embodiment of the disclosure, based on the single-point indoor/outdoor determination result, user-level indoor/outdoor determination is performed. If the determination result is outdoor, the process will proceed to step S102, or if the determination result is indoor, the process will proceed to step S103.

At step S102, when a user-level determination result is outdoor, user-level trajectory smoothing is performed based on an outdoor single-point positioning result, and the user-level trajectory smoothing is matched with a road.

In the embodiment of the disclosure, user-level trajectory smoothing is performed for an MR, a determination result of which is outdoor, and a smoothing result is matched with a road.

In the embodiments of the disclosure, it is also necessary to extract a road network topological structure from an original vector map to perform user-level trajectory smoothing and road matching for the outdoor MR.

At step S103, when the user-level determination result is indoor, indoor point smoothing is performed based on an indoor single-point positioning result.

In the embodiment of the disclosure, indoor positioning point smoothing is performed for an MR, a determination result of which is indoor.

In the embodiment of the disclosure, a user must pass through an outdoor space from one building to another building. Therefore, if the user is continuously determined to be indoor for a period of time, then it is considered that the user keeps in the same building.

A position of an outdoor point that is closest to the point in the period of time is extracted, and a range, in which the building may be located, is calculated according to a time difference and a speed that is calculated by Kalman filtering. All the buildings in this range that are positioned within the period of time are taken as candidate buildings for the determination.

The determination process used here is performing weighted K nearest neighbors (WKNN) weighted averaging on buildings that are positioned during a period of time, and then selecting a building that is closest to a weighted average position $\bar{L}$ as a building determination result. A weight of the weighted averaging is the frequency $w_i$ of occurrence of a building, and the following equation is satisfied:

$$\bar{L} = \frac{\sum_i w_i L_i}{\sum_i w_i}$$

At step S104, a single-user complete trajectory is generated based on a matching result of the user-level trajectory smoothing and the road as well as the indoor point smoothing.

In the embodiment of the disclosure, the single-user complete trajectory is generated in combination with the results from step S102 and step S103.

In the embodiment of the disclosure, positioning results in which outdoor trajectory smoothing is matched with a road, and indoor point smoothing results are sorted in ascending order by time, so as to generate a user-level complete trajectory.

Embodiment II

Fig. 2 is a flowchart of a road network topological structure extraction process provided by the embodiment of the disclosure. The road network topological structure extraction process of the embodiment of the disclosure will be described in details below with reference to Fig. 2.

The process begins at step S201, where a road layer is extracted from a vector map to cover road grids.

In the embodiment of the disclosure, the vector map uses the WGS84 coordinate system, which needs to be converted into the Mercator coordinate system for gridding. Coordinates of a starting point and an ending point of a road in the vector map are initially converted into the Mercator coordinate system. The conversion approach satisfies the following equation:

C = 20037508.34

$$merca_{X\_1} = \left[ \frac{lon \cdot C}{180} \right]$$

$$merca_{Y\_1} = \left[ \ln\left( \tan\left( \frac{(lat+90)\pi}{360} \right) \right) \frac{C}{\pi} \right]$$

where *lon* refers to the longitude of the WGS84 coordinate system, *lat* refers to the latitude of the WGS84 coordinate system, [·] refers to rounding, $merca_{X\_1}$ refers to the one-meter grid abscissa under the Mercator coordinate system, and $merca_{Y\_1}$ refers to the one-meter grid ordinate under the Mercator coordinate system.

Started from a grid starting point of the road, movement of one grid is performed each time, until a grid ending point of the road is reached. A grid to be reached in each instance of movement is an adjacent grid that is closest to the grid ending point. The distance is an Euclidean distance.

At step S202, a road central line is extracted.

In the embodiment of the disclosure, in a big-map scale scenario, an operator needs to segment a map first, and respectively extract a road central line from each small map, so as to improve the algorithm performance.

Herein, the map is segmented. Then, 1000-meter gridding processing is performed based on one-meter grid coordinates under the Mercator coordinate system that are obtained in S1011, and the following equation is satisfied:

$$merca_{X\_1000} = \left[ \frac{merca_{X\_1}}{1000} \right]$$

$$merca_{Y\_1000} = \left[ \frac{merca_{Y\_1}}{1000} \right]$$

where $merca_{X\_1000}$ refers to the 1000-meter grid abscissa under the Mercator coordinate system, and $merca_{Y\_1000}$ refers to the 1000-meter grid ordinate under the Mercator coordinate system.

One-meter map grids having the same 1000-meter gridding result are combined into a small map, and a road central line is extracted from the small map. Here, various road central line extraction processes can be used. For example, a Hilditch algorithm, a Pavlidis algorithm, a Rosenfeld algorithm, etc. are all applicable.

At step S203, a road topology is extracted.

In the embodiment of the disclosure, a road between intersections is split into a form that is represented by a line segment vector. A curved line segment formed by road grids is made equivalent to a straight line segment. If the distance d between grids before and after the curved line segment is made equivalent to the straight line segment satisfies $d > d_{max}$, then the current point is taken as an ending point of the previous equivalent straight line segment, and the current point is also taken as a starting point of a new equivalent straight line segment.

Embodiment III

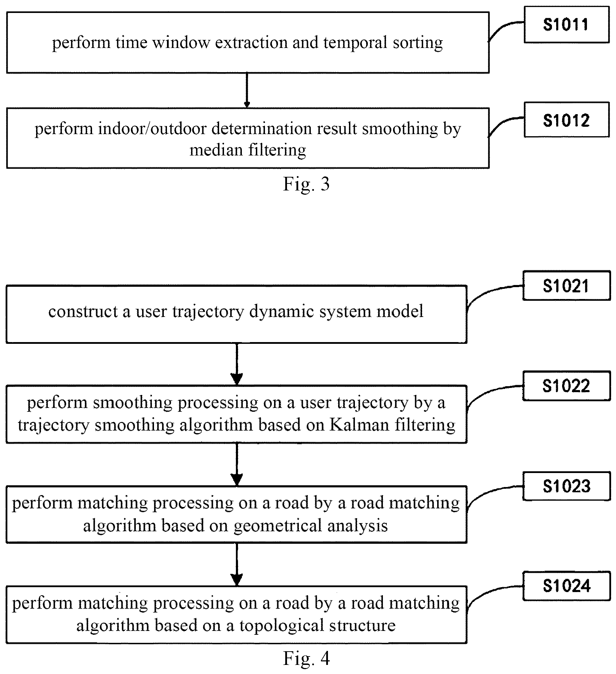

Fig. 3 is a flowchart of a user-level indoor/outdoor determination process provided by the embodiment of the disclosure. The user-level indoor/outdoor determination process of the embodiment of the disclosure will be described in details below with reference to Fig. 3.

The process begins at step S1011, where time window extraction and temporal sorting are performed.

In the embodiment of the present disclosure, in units of users, MRs for each user are sorted in ascending order of time. The length of a moving window is set to be five minutes. All the MRs within five minutes are extracted as one time window, and the MRs within the time window are ensured to be in ascending order of time.

At step S1012, indoor/outdoor determination result smoothing is performed by median filtering.

In the embodiment of the disclosure, an indoor/outdoor determination result of a single MR includes 0 (indoor) and 1 (outdoor). Therefore, the indoor/outdoor determination result of the single MR merely include discrete 0 and 1. The median filtering approach used here refers to taking a median of indoor/outdoor determination results within a time range of the current point minus and plus 15 seconds as an indoor/outdoor determination result of the current point.

Embodiment IV

Fig. 4 is a flowchart of a user-level outdoor trajectory smoothing process and a road matching process provided by an embodiment of the disclosure. The user-level outdoor trajectory smoothing process and the road matching process will be described in details below in conjunction with Fig. 4.

The process begins at step S1021, where a user trajectory dynamic system model is constructed.

For example, in a Kalman filtering model, it is assumed that an actual state at a moment **k** is evolved from the state at a moment **k-1,** which satisfies the following equation:

$$\mathbf{x}_k = \mathbf{F}_k \mathbf{x}_{k-1} + \mathbf{B}_k \mathbf{u}_k + \mathbf{w}_k$$

$$\mathbf{x}_k = \begin{bmatrix} x^k \\ v_x^k \\ y^k \\ v_y^k \end{bmatrix} \qquad \mathbf{F}_k = \begin{bmatrix} 1 & \Delta t & 0 & 0 \\ 0 & 1 & 0 & 0 \\ 0 & 0 & 1 & \Delta t \\ 0 & 0 & 0 & 1 \end{bmatrix} \qquad \mathbf{w}_k = \begin{bmatrix} \Delta t^2/2 & 0 \\ \Delta t & 0 \\ 0 & \Delta t^2/2 \\ 0 & \Delta t \end{bmatrix} \begin{bmatrix} a_x \\ a_y \end{bmatrix}$$

where $\boldsymbol{x}_k$ refers to a system state at the moment k, including a position $x^{k-1}$ and a speed $v_x^{k-1}$ in a direction x, and a position $y^{k-1}$ and a speed $v_y^{k-1}$ in a direction y; $\boldsymbol{F}_k$ refers to a state change model that acts on $\boldsymbol{x}_{k-1}$, i.e. the relationship between position, speed and time; $\boldsymbol{B}_k$ is an input-control model that acts on a controller vector $\boldsymbol{u}_k$, and there is no input for the current problem; $\boldsymbol{w}_k \sim N(\boldsymbol{0}, \boldsymbol{Q}_k)$ refers to process noise, which conforms to a multivariate normal distribution having a mean being 0 and a covariance matrix being $\boldsymbol{Q}_k = E[\boldsymbol{w}_k \boldsymbol{w}_k^T]$, in the current problem, the process noise is generated from accelerations in the direction x and the direction y, and conforms to the relationship between position, speed, acceleration and time.

At the moment **k**, a measure $\boldsymbol{z}_k$ of the actual state $\boldsymbol{x}_k$ satisfies the following equation:

$$\mathbf{z}_k = \mathbf{H}_k \mathbf{x}_k + \mathbf{v}_k$$

$$\mathbf{z}_k = \begin{bmatrix} z_x^k \\ z_y^k \end{bmatrix} \qquad \mathbf{H}_k = \begin{bmatrix} 1 & 0 & 0 & 0 \\ 0 & 0 & 1 & 0 \end{bmatrix} \qquad \mathbf{v}_k = \begin{bmatrix} e_x \\ e_y \end{bmatrix}$$

where $H_k$ refers to an observation model, where an actual state space is mapped into an observation space, and in the current problem, what are observed are x and y positions that are previously outputted by a positioning server; $v_k \sim N(\mathbf{0}, R_k)$ is observation noise, which conforms to a multivariate normal distribution having a mean being 0 and a covariance matrix being $\boldsymbol{R}_k = E[\boldsymbol{v}_k \boldsymbol{v}_k^T]$, and in the current problem, the observation noise is a positioning error. Since the Kalman filtering is a linear system, a two-dimensional error must be split into errors in the direction x and the direction y.

At step S1022, smoothing processing is performed on a user trajectory by a trajectory smoothing algorithm based on the Kalman filtering.

In the embodiment of the disclosure, the state of the Kalman filter is indicated by the following two variables: where $\hat{x}_{k|k}$ is an estimated state at the moment **k**; and $P_{k|k}$ refers to a covariance matrix of posterior estimation errors, measuring the precision of an estimated value.

A prediction process includes:

predicting the state: $\hat{x}_{k|k-1} = F_k\hat{x}_{k-1|k-1} + B_k u_k$ and

predicting an estimation covariance matrix: $P_{k|k-1} = F_k P_{k-1|k-1} F_k^T + Q_k$

An update process includes:

measuring a margin: $\tilde{y}_k = z_k - H_k\hat{x}_{k|k-1}$

measuring a margin covariance: $S_k = H_k P_{k|k-1} H_k^T + R_k$

optimizing a Kalman gain: $K_k = P_{k|k-1} H_k^T S_k^{-1}$

updating an estimated state: $\hat{x}_{k|k} = \hat{x}_{k|k-1} + K_k \tilde{y}_k$ and

updating an estimated covariance: $P_{k|k} = (I - K_k H_k)P_{k|k-1}$

At step S1023, matching processing is performed on a road by a road matching algorithm based on geometrical analysis.

In the embodiment of the disclosure, the road matching algorithm based on geometrical analysis is a basis of all the road matching algorithms. In the disclosure, for example, a "point-to-line" geometrical road matching algorithm is used.

At step S1024, matching processing is performed on a road by a road matching algorithm based on a topological structure.

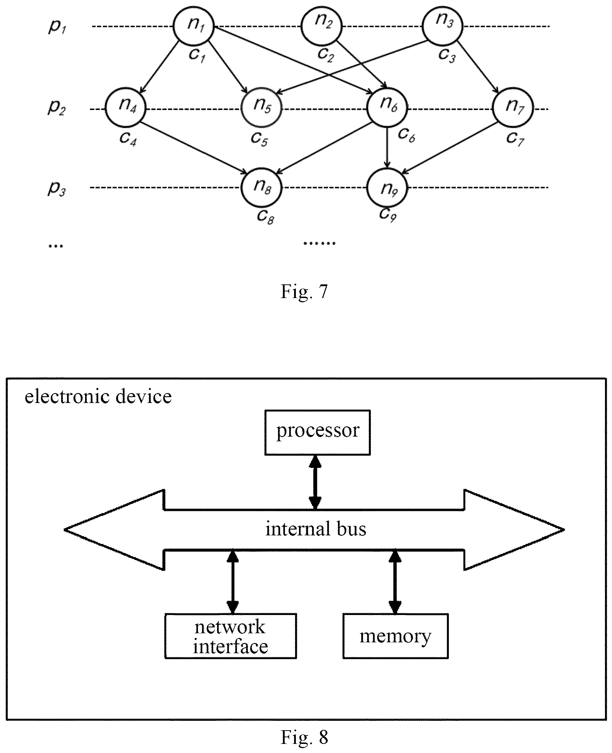

In the embodiment of the disclosure, the road matching algorithm based on the topological structure refers to performing road matching calculation based on geometrical analysis matching and by taking the topological relationship between roads in a road network, a vehicle speed, etc. into consideration. The precision of matching is greatly improved, such that matching results are continuous and rational trajectories, rather than discrete road projection points. In order to perform trajectory matching based on topology, a data structure that can store a plurality of trajectories is required, so that historical points can be corrected on the basis of following matching. Referring to Fig. 7, an abstraction of a tree data structure is used here.

Embodiment V

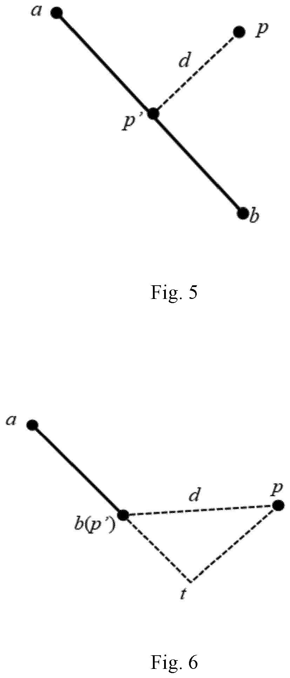

Fig. 5 is a schematic diagram of a "point-to-line" road matching projection point being on a road as provided in the embodiment of the disclosure. A "point-to-line" road matching projection point being on a road will be described in details below in conjunction with Fig. 5.

In the embodiment of the disclosure, the geometrical vertical distance from a point to be matched to each candidate matching road segment in a road network is calculated by a "point-to-line" matching algorithm, a road segment in the shortest vertical distance is taken as an optimal matching result, the point to be matched is directly vertically projected onto the optimal matching road segment, and a projection point is an optimal matching position. That is, P' is an optimal projection point of P onto a line ab, as shown in Fig. 5.

Embodiment VI

Fig. 6 is a schematic diagram of a "point-to-line" road matching projection point being out of a road provided by the embodiment of the disclosure. A "point-to-line" road matching projection point being out of a road will be described in details below in conjunction with Fig. 6.

In the embodiment of the disclosure, if a vertical projection result falls onto an extension line of a road segment, rather than falling onto the road segment, referring to Fig. 6, then a node on the road segment that is in the shortest geometrical distance from a positioning point to be matched is selected as an optimal matching position. As shown in Fig. 6, the shortest distance d is PP', in which case P' is b, that is, at this time, b is an optimal projection point of P.

Embodiment VII

Fig. 7 is a schematic diagram of a tree structure for topology-based road matching provided by the embodiments of the disclosure. A tree structure for topology-based road matching will be described in details below in conjunction with Fig. 7.

In the embodiment of the disclosure, in order to perform trajectory matching based on topology, a data structure that can store a plurality of trajectories is required, so that historical points can be corrected based on following matching. Referring to Fig. 7, an abstraction of a tree data structure is used here.

In the embodiment of the disclosure, for a matching degree c, the matching of a node refers to the geometrical matching between the current position point p and the current road (node) n. A matching distance threshold value is $d_{th}$, and when a matching distance d is greater than $d_{th}$, the matching fails, and the matching degree is defined as $c = 1 - d/d_{th}$. A trajectory matching degree is defined as the sum $\Sigma c$ of matching degrees between a root node and respective current nodes, and the greater a matching degree is, the greater a matching effect is.

In the embodiment of the disclosure, a root node pi of a tree corresponds to a road with which a position starting point can be matched on the basis of geometry, a matching distance threshold value $d_{ini}$ is set (the value of $d_{ini}$ is usually larger, so as to ensure, as much as possible, that matching results contain a road in which a user is actually located. Each root node corresponds to one matching degree ($c_1$, $c_2$, $c_3$).

In the embodiments of the disclosure, the growth of each layer of the tree corresponds to a position update ($p_1 \rightarrow p_2$), each position update contains an update of a point speed, and an average value of the speed at the previous point and the speed at an updated point is calculated as an average speed of the current traveling road segment, so as to calculate a traveling distance on the current road segment. Roads that can be reached within this distance threshold value range are searched for based on road topology, and the updated point is matched with the roads ($n_4$, $n_5$, $n_6$, $n_7$) that are found. A road distance threshold value $d_{this}$ that the previous point is matched, and a distance threshold value $d_{other}$ that a new road is matched are set ($d_{this}$ is usually greater than $d_{other}$, so as to reduce the jumping of a matching trajectory between roads). Each matching road corresponds to one matching degree ($c_4$, $c_5$, $c_6$, $c_7$). Matching roads of a layer pi and matching roads of a layer $p_2$ may be in a multiple-to-multiple relationship

In the embodiment of the disclosure, the pruning of the tree is executed: the pruning of the tree includes passive pruning and active pruning. The passive pruning refers to reaching the next updated position when a certain node on a certain layer of the tree cannot continue to grow, that is, when a motion distance limit and a road topological relationship cannot be satisfied at a certain position, and at this time, pruning the node and a parent node (n5), which is only associated with the node. The active pruning refers to, for each node of an updated layer, only reserving a trajectory to the node that has the highest matching degree, and pruning the other trajectories; and in addition, when the number of matching roads (nodes) of a certain layer of the tree is greater than a threshold value t, only selecting t nodes, the matching degrees of trajectories from which to the current node are the highest, so as to limit a search width, ensuring search performance.

In the embodiment of the disclosure, the reset of the tree is executed: when no road from a point pi to a point pi+i that meets a condition is found and the tree cannot continue to be extended, then searching for root nodes by taking the point pi+i as a starting point, and restarting a new trajectory, with the trajectory being possibly not connected to a previously generated trajectory.

Embodiment VIII

Fig. 8 is a schematic structural diagram of an electronic device of the embodiment of the disclosure. As shown in Fig. 8, at a hardware level, the electronic device includes a processor, and optionally further includes an internal bus, a network interface and a memory. The memory may contain an internal storage, for example, a high-speed random-access memory (RAM), and may also include a non-volatile memory, for example, at least one magnetic disk memory. Certainly, the electronic device may further include hardware required by other services.

The processor, the network interface and the memory can be connected to each other by means of the internal bus, and the internal bus may be an industry standard architecture (ISA) bus, a peripheral component interconnect (PCI) bus, or an extended industry standard architecture (EISA) bus, etc. The bus may include an address bus, a data bus, a control bus, etc. For ease of illustration, only one two-way arrow is shown in Fig. 8, but it does not mean that there is only one bus or one type of bus.

The memory is used for storing a program. Specifically, the program may include a program code, and the program code includes a computer operation instruction.

The processor reads a corresponding computer program from the non-volatile memory to the memory and then runs same to form a shared resource access control apparatus at a logic level. The processor executes programs that are stored in the memory, and is specifically used for executing the steps of the user trajectory positioning method.

Embodiment IX

Also provided in the embodiment of the disclosure is a computer-readable storage medium. The computer-readable storage medium stores one or more programs, the one or more programs include instructions, and the instructions, when being executed by a portable electronic device that includes a plurality of application programs, can enable the portable electronic device to execute the methods of the embodiments as shown in the accompanying drawings, and specifically to be used for executing the steps of the above-mentioned user ectory positioning method.

In summary, by utilizing the user trajectory positioning method provided by the disclosure, user-level indoor/outdoor determination result smoothing is performed based on a single-point indoor/outdoor determination result; user-level trajectory smoothing is performed based on an outdoor single-point positioning result, and the user-level trajectory smoothing is matched with a road; indoor point smoothing is performed based on an indoor single-point positioning result; and a single-user complete trajectory is generated based on a matching result of the user-level trajectory smoothing and the road as well as the indoor point smoothing. Compared with a single point that is input, the finally generated single-user complete trajectory has higher precision of positioning, and has a positioning result, a timing relationship in which is more rational.

The implementations disclosed in the disclosure are as stated above, but they are only implementations illustrated for facilitating the understanding of the disclosure, rather than being intended for limiting the disclosure. Those skilled in the art would readily make any modification and change to the form and details of the implementation without departing from the scope of the disclosure, but the scope of the disclosure shall be defined in the appended claims.

**Claims**

1. A user trajectory positioning method, comprising:

   performing user-level indoor/outdoor determination result smoothing based on a single-point indoor/outdoor determination result;
   performing, when a user-level determination result is outdoor, user-level trajectory smoothing based on an outdoor single-point positioning result, and matching the user-level trajectory smoothing with a road;
   performing, when the user-level determination result is indoor, indoor point smoothing based on an indoor single-point positioning result; and
   generating a single-user complete trajectory based on a matching result of the user-level trajectory smoothing and the road as well as the indoor point smoothing.

2. The user ectory positioning method according to claim 1, wherein performing the user-level indoor/outdoor determination result smoothing based on the single-point indoor/outdoor determination result comprises:

   performing time window extraction and temporal sorting on single-point indoor/outdoor determination results; and
   smoothing the single-point indoor/outdoor determination results in each time window by median filtering.

3. The user trajectory positioning method according to claim 1, wherein performing the user-level trajectory smoothing based on the outdoor single-point positioning result and matching the user-level trajectory smoothing with the road comprise:

   constructing a user trajectory dynamic system model;
   performing smoothing processing on a user trajectory; and
   performing matching processing on a result of the smoothing processing and a road.

4. The user ectory positioning method according to claim 3, wherein constructing the user trajectory dynamic system model comprises constructing a user trajectory dynamic system model by Kalman filtering.

5. The user trajectory positioning method according to claim 3, wherein performing smoothing processing on the user trajectory comprises performing smoothing processing on the user trajectory by a trajectory smoothing algorithm based on the Kalman filtering.

6. The user ectory positioning method according to claim 3, wherein performing matching processing on the result of the smoothing processing and the road comprises performing matching processing on the result of the smoothing processing and the road by a road matching algorithm based on geometrical analysis or a road matching algorithm based on a topological structure.

7. The user trajectory positioning method according to claim 1, wherein before the user-level indoor/outdoor determination result smoothing is performed based on the single-point indoor/outdoor determination result, the method further comprises:
extracting a road network topological structure from an original vector map.

8. The user trajectory positioning method according to claim 7, wherein extracting the road network topological structure from the original vector map comprises:

extracting a road layer from the vector map to cover road grids;
extracting a road central line; and
extracting road network topology.

9. The user trajectory positioning method according to claim 1, wherein performing indoor point smoothing based on the indoor single-point positioning result comprises:
applying an indoor point smoothing algorithm based on WKNN.

10. An electronic device, comprising:

a processor; and
a memory, which is configured to store a computer-executable instruction, wherein the computer-executable instruction, when being executed, enables the processor to execute the steps of the user trajectory positioning method according to any one of claims 1-9.

11. A computer-readable storage medium, wherein the computer-readable storage medium stores one or more programs, and the one or more programs, when being executed by an electronic device that comprises a plurality of application programs, enables the electronic device to execute the user trajectory positioning method according to any one of claims 1-9.

perform user-level indoor/outdoor determination result smoothing based on a single-point indoor/outdoor determination result — S101

when a user-level determination result is outdoor, perform user-level trajectory smoothing based on an outdoor single-point positioning result, and match the user-level trajectory smoothing with a road

S102

when a user-level determination result is indoor, perform indoor point smoothing based on an indoor single-point positioning result — S103

generate a single-user complete trajectory, based on a matching result of the user-level trajectory smoothing and the road, and the indoor point smoothing — S104

Fig. 1

extract a road layer from a vector map to cover road grids — S201

extract a road central line — S202

extract road topology — S203

Fig. 2

perform time window extraction and temporal sorting — S1011

perform indoor/outdoor determination result smoothing by median filtering — S1012

Fig. 3

construct a user trajectory dynamic system model — S1021

perform smoothing processing on a user trajectory by a trajectory smoothing algorithm based on Kalman filtering — S1022

perform matching processing on a road by a road matching algorithm based on geometrical analysis — S1023

perform matching processing on a road by a road matching algorithm based on a topological structure — S1024

Fig. 4

Fig. 5

Fig. 6

Fig. 7

Fig. 8

## INTERNATIONAL SEARCH REPORT

| International application No. |
| --- |
| **PCT/CN2021/134025** |

**A. CLASSIFICATION OF SUBJECT MATTER**

G01C 21/20(2006.01)i; G01S 19/48(2010.01)i

According to International Patent Classification (IPC) or to both national classification and IPC

**B. FIELDS SEARCHED**

Minimum documentation searched (classification system followed by classification symbols)

G01C21, G01S19, G01S5

Documentation searched other than minimum documentation to the extent that such documents are included in the fields searched

Electronic data base consulted during the international search (name of data base and, where practicable, search terms used)

CNABS, CNTXT, CNKI, VEN, USTXT, EPTXT: 室内, 室外, 室内外, 定位, 导航, 轨迹, 平滑, 匹配, 滤波, 拓扑, 中心, indoor, outdoor, orient+, navigat+, trajectory, smooth+, match+, filter, topology+, center

**C. DOCUMENTS CONSIDERED TO BE RELEVANT**

| Category* | Citation of document, with indication, where appropriate, of the relevant passages | Relevant to claim No. |
| --- | --- | --- |
| Y | CN 107806878 A (GUILIN UNIVERSITY OF ELECTRONIC TECHNOLOGY) 16 March 2018 (2018-03-16) description, paragraphs 53-56, figure 1 | 1-11 |
| Y | CN 101408434 A (SHENZHEN INSTITUTE OF INFORMATION TECHNOLOGY) 15 April 2009 (2009-04-15) description page 5 paragraph 2, page 7 last paragraph to page 8 paragraph 1 | 1-11 |
| Y | CN 110750607 A (XI'AN POLYTECHNIC UNIVERSITY) 04 February 2020 (2020-02-04) description paragraphs 36-38 | 8 |
| Y | CN 101895867 A (HARBIN INSTITUTE OF TECHNOLOGY) 24 November 2010 (2010-11-24) description, paragraph 29 | 9 |
| A | CN 111368014 A (GUANGDONG XIAOTIANCAI TECHNOLOGY CO., LTD.) 03 July 2020 (2020-07-03) entire document | 1-11 |
| A | CN 108828643 A (CHANG'AN UNIVERSITY) 16 November 2018 (2018-11-16) entire document | 1-11 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **09 February 2022** | **16 February 2022** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2021/134025** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 110798804 A (ZTE CORPORATION) 14 February 2020 (2020-02-14)<br>    entire document | 1-11 |
| A | US 10075935 B1 (MAPSTED CORP) 11 September 2018 (2018-09-11)<br>    entire document | 1-11 |

Form PCT/ISA/210 (second sheet) (January 2015)

INTERNATIONAL SEARCH REPORT
Information on patent family members

International application No.

**PCT/CN2021/134025**

| Patent document cited in search report | | | Publication date (day/month/year) | Patent family member(s) | | | Publication date (day/month/year) |
|---|---|---|---|---|---|---|---|
| CN | 107806878 | A | 16 March 2018 | None | | | |
| CN | 101408434 | A | 15 April 2009 | CN | 101408434 | B | 25 May 2011 |
| CN | 110750607 | A | 04 February 2020 | None | | | |
| CN | 101895867 | A | 24 November 2010 | CN | 101895867 | B | 06 November 2013 |
| CN | 111368014 | A | 03 July 2020 | WO | 2021129630 | A1 | 01 July 2021 |
| CN | 108828643 | A | 16 November 2018 | None | | | |
| CN | 110798804 | A | 14 February 2020 | WO | 2020024597 | A1 | 06 February 2020 |
| US | 10075935 | B1 | 11 September 2018 | CA | 3011852 | C | 05 March 2019 |
| | | | | EP | 3480558 | A1 | 08 May 2019 |
| | | | | US | 2019141661 | A1 | 09 May 2019 |
| | | | | CA | 3011852 | A1 | 19 September 2018 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202011493438X